# EUROPEAN PATENT SPECIFICATION

(11) **EP 4 505 428 B1**
(45) Date of publication and mention of the grant of the patent: **04.11.2026**
(21) Application number: 23785082.1
(22) Date of filing: 04.04.2023
(51) Int. Cl.: G06V 40/40, G06F 21/32, G06V 40/19, G06V 10/24, G06V 10/75, G06V 40/18, G06V 10/60, H04L 9/40

(54) **HEAD-TILT INVARIANT REAL-EYE DETECTION**
KOPF-NEIGUNGSINVARIANTE REALAUGENDETEKTION
DÉTECTION D'OEIL RÉEL INVARIANTE À L'INCLINAISON DE TÊTE

(30) Priority: 08.04.2022 SE 2250446
(43) Date of publication of application: 12.02.2025
(73) Proprietor: Fingerprint Cards Anacatum IP AB, 411 19 Göteborg (SE)
(72) Inventor: HINE, Gabriel, 00122 ROME (IT); STEGMANN, Mikkel, 2720 VANLØSE (DK)
(74) Representative: Kransell & Wennborg KB
(86) International application number: PCT/SE2023/050302
(87) International publication number: WO 2023/195895

(56) References cited:
- EP-A1- 3 182 316
- EP-A1- 3 866 447
- WO-A1-2019/108110
- US-A1- 2002 131 623
- US-A1- 2017 161 578
- US-A1- 2017 161 578
- US-A1- 2019 266 398
- US-A1- 2019 266 398
- US-A1- 2019 266 399
- RANI SHILPA ET AL: "IRIS based Recognition and Spoofing Attacks: A Review", 2021 10TH INTERNATIONAL CONFERENCE ON SYSTEM MODELING & ADVANCEMENT IN RESEARCH TRENDS (SMART), IEEE, 10 December 2021 (2021-12-10), pages 2 - 6, XP034069794, ISBN: 978-1-6654-3968-8, [retrieved on 20220107], DOI: 10.1109/SMART52563.2021.9676261
- BOUR L J: "POLARIZED LIGHT AND THE EYE", VISUAL OPTICS AND INSTRUMENTATION, XX, XX, vol. 1, 1 January 1991 (1991-01-01), pages 310 - 325, XP008027890
- GARY P. MISSON: "Circular polarization biomicroscopy: a method for determining human corneal stromal lamellar organization in vivo", OPHTHALMIC AND PHYSIOLOGICAL OPTICS, vol. 27, no. 3, 1 May 2007 (2007-05-01), pages 256 - 264, XP055119909, ISSN: 02755408, DOI: 10.1111/j.1475-1313.2007.00482.x
- MISSON G. P.: "Birefringent Properties of the Human Cornea in vivo: Towards a New Model of Corneal Structure", PHD THESIS, UNIVERSITY OF WARWICK, 1 September 2012 (2012-09-01), pages 1 - 307, XP093100638
- SOBCZAK MARCELINA, ASEJCZYK-WIDLICKA MAGDALENA, SZAFRANIEC AGNIESZKA, KURZYNOWSKI PIOTR: "Analysis of torsional eye movements using the corneal birefringence pattern", JOURNAL OF THE OPTICAL SOCIETY OF AMERICA A, vol. 36, no. 4, 1 April 2019 (2019-04-01), pages B23 - B27, XP093100653, ISSN: 1084-7529, DOI: 10.1364/JOSAA.36.000B23

## Description

### TECHNICAL FIELD

The present disclosure relates to a method of a biometric recognition system of performing real-eye detection, and a biometric recognition system performing the method.

### BACKGROUND

When capturing images of an eye of a user for performing iris recognition using for instance a camera of a smartphone for subsequently unlocking the smart phone of the user, subtle visual structures and features of the user's iris are identified in the captured image and compared to corresponding features of a previously enrolled iris image in order to find a match. These structures are a strong carrier of eye identity, and by association, subject identity.

Both during authentication and enrolment of the user, accurate detection of these features is pivotal for performing reliable iris recognition. However, iris recognition is susceptible to spoofing where an attacker e.g. may present a credible and detailed iris printout to an iris recognition system for attaining false authentication. Relevant prior art includes US 2017/161578 A1.

### SUMMARY

One objective is to solve, or at least mitigate, this problem in the art and thus to provide an improved method of a biometric recognition system of performing real-eye detection.

This objective is attained in a first aspect by a method of a biometric recognition system of performing real-eye detection for an individual. The method comprises capturing at least one image comprising a representation of an eye of the individual, which image is captured utilizing polarized light reflected at the eye and received at a polarization-sensitive camera capturing said image, wherein a polarization configuration is selected which produces an iso-chrome pattern of the representation of the eye in the captured image, detecting, from the representation, birefringent features of a cornea of the individual, aligning the detected birefringent features with birefringent cornea features of an expected eye representation, determining, by matching the detected birefringent cornea features (124) with the expected birefringent cornea features, whether the birefringent features are correctly rendered in the captured image, and if so determining that the eye is a real eye.

This objective is attained in a second aspect by a biometric recognition system configured to perform real-eye detection. The system comprises a polarization-sensitive camera configured to capture at least one image comprising a representation of an eye of the individual, which image is captured utilizing polarized light reflected at the eye and received at a polarization-sensitive camera capturing said image, wherein a polarization configuration is selected which produces an iso-chrome pattern of the representation of the eye in the captured image. The system further comprises a processing unit configured to detect, from the representation, birefringent features of a cornea of the individual, align the detected birefringent features with birefringent cornea features of an expected eye representation, determine, by matching the detected birefringent cornea features (124) with the expected birefringent cornea features, whether the birefringent features are correctly rendered in the captured image, and if so to determine that the eye is a real eye.

Thus, by subjecting the eye of an individual to polarized light and capturing an image of the eye with a polarization-sensitive camera, so-called birefringent features of the cornea covering the iris will be present in the image. A spoof eye provided by an attacker, such as a paper printout, will not exhibit the birefringent cornea features and may thus be detected as a spoof.

If the detected birefringent cornea features have the appearance that would be expected upon a particular polarization configuration being applied, they are considered correctly rendered and the eye will be determined to be a real, authentic eye. To this effect, the detected birefringent cornea features may be matched against birefringent cornea features of a reference image and if there is a match, the detected birefringent cornea features are considered correctly rendered.

Now, if the user tilts her head (and thus her eyes), the birefringent cornea features typically become blurred and/or deformed in the captured image due to various polarization properties, making it difficult to determine whether or not the detected blurred/deform birefringent cornea features are correctly rendered in a captured image, or even that the birefringent cornea features at all are present in a captured image for subsequent detection.

To resolve this issue, a polarization configuration is selected which produces an iso-chrome pattern of the representation of the iris in the captured image. Advantageously, this will mitigate or even eliminate the negative effect of the head tilt and ultimately result in an image being free from blur.

The eye orientation of the individual is subsequently taken into account by aligning the detected birefringent cornea features with expected birefringent cornea features e.g. from a reference image (given that there indeed is a head tilt) for a match and thus determining whether the birefringent features are correctly rendered in the captured image and if so, it is determined that the iris originates from a real eye.

Advantageously, this makes the system invariant to user head-tilts; even if the user would tilt her head, an iso-chrome pattern is highlighted in the captured image, while an iso-gyre pattern is blocked and any blurring/deformation of birefringent cornea features in a captured image is mitigated or even eliminated. The head tilt is subsequently compensated for by performing the alignment of the detected cornea feature with the expected cornea features for determining whether or not detected birefringent cornea features match the expected birefringent cornea features.

Thus, this will make the detection of birefringent cornea features in a captured image far more effective, and the number of false rejections may be decreased since the sensitivity of the system is improved.

In an embodiment, the polarization of light is caused by emitting light through a first polarization filter being circularly polarized, and the polarization sensitivity of the camera is caused by receiving the polarized light reflected by the eye at the camera via a second polarization filter being circularly polarized.

In another embodiment, the polarization of light is caused by emitting light through a first polarization filter being circularly polarized, and the polarization sensitivity of the camera is caused by receiving the polarized light reflected by the eye at the camera via a third polarization filter having 0° polarization, a fourth polarization filter having 45° polarization, a fifth polarization filter having 90° and a sixth polarization filter having 135° polarization, each filter being aligned with an image sensor of the camera to enable simultaneous capturing of four differently polarized images comprising the representation of the eye of the individual, the capturing of the at least one image comprising a representation of an eye of the individual comprising capturing four simultaneous images, computing Stokes parameters utilizing pixel intensity for each of the captured images, computing degree of linear polarization for each pixel utilizing the computed Stokes parameters and creating a single image by assigning each pixel of the created image the intensity stipulated by the computed degree of linear polarization, from which created single image the birefringent cornea features are detected.

In an embodiment, the aligning is performed by rotating the captured representation of the eye such that the captured eye representation has a same orientation as a non-tilted expected eye representation or by rotating the non-tilted expected eye representation to have the same eye orientation as the captured eye representation, in order to cause the captured eye representation and the expected eye representation to have the same orientation irrespective of the determined eye orientation.

In an embodiment, if after a set number of failed attempts have been made for determining that the birefringent features are correctly rendered in the captured image, the individual is required to prove knowledge of secret credentials before further attempts are allowed.

In an embodiment, the detected birefringent cornea features determined to be correctly rendered is compared with previously enrolled birefringent cornea features, and if there is a match an individual associated with the birefringent cornea features determined to be correctly rendered is authenticated.

In an embodiment, iris, face or periocular features are detected from the image in which the birefringent cornea features are determined to be correctly rendered and compared with previously enrolled iris, face or periocular features, and if there is a match an individual associated with the detected iris, face or periocular features is authenticated.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Figure 1 illustrates a user being located in front of a smart phone, in which embodiments may be implemented;
Figure 2 shows a camera image sensor being part of an iris recognition system according to an embodiment;
Figure 3a illustrates a user being subjected to unpolarized light for iris image capture;
Figure 3b illustrates a user being subjected to polarized light for iris image capture by a polarization-sensitive camera according to an embodiment;
Figure 4a illustrates an eye being subjected to unpolarized light;
Figure 4b illustrates an eye being subjected to polarized light where a polarization-sensitive camera will capture images comprising birefringent features of the cornea according to an embodiment;
Figure 4c illustrates different appearances of birefringent features of the cornea of the user when selecting different sets of polarization properties of polarizing filters;
Figure 5 illustrates deformation of birefringent cornea features occurring during head tilt;
Figure 6 shows a flowchart of a method of performing real-eye detection according to an embodiment;
Figure 7 illustrates highlighting of an iso-chrome iris pattern for zero head tilt and 30° head tilt, respectively, according to embodiments;
Figure 8 illustrates a user being subjected to polarized light for iris image capture by a polarization-sensitive camera according to another embodiment;
Figure 9 shows a flowchart of a method of performing real-eye detection using a set-up according to the embodiment illustrated in Figure 8;
Figure 10 shows a flowchart of a method of a biometric recognition system of performing real-eye detection and further birefringent cornea feature authentication according to an embodiment;
Figure 11 illustrates three different authentication responses (a)-(c) according to embodiments; and
Figure 12 shows a flowchart of a method of a biometric recognition system of performing real-eye detection and further iris feature authentication according to an embodiment.

### DETAILED DESCRIPTION

The aspects of the present disclosure will now be described more fully hereinafter with reference to the accompanying drawings, in which certain embodiments of the invention are shown.

These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

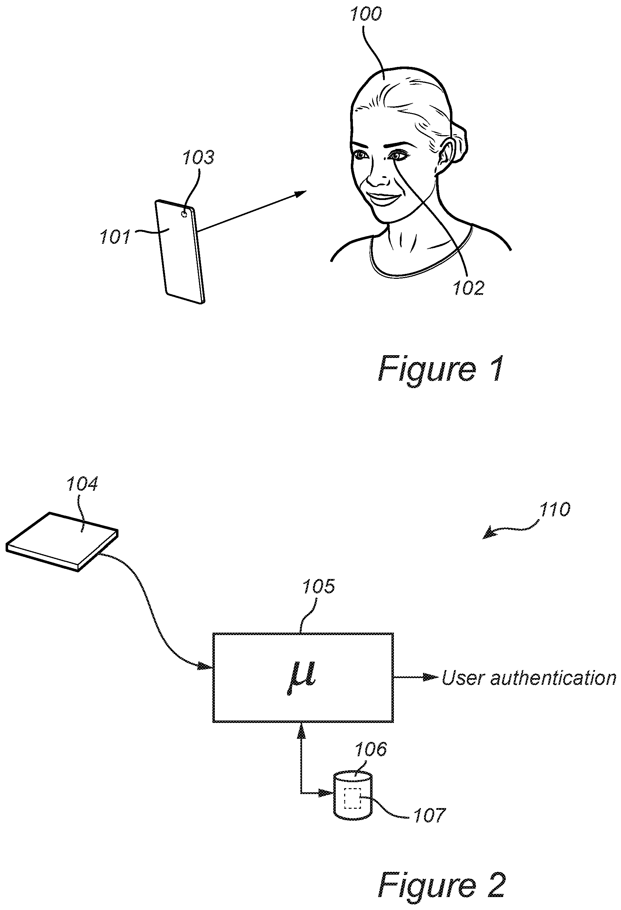

Figure 1 illustrates a user 100 being located in front of a smart phone 101. In order to unlock the smart phone 101, a camera 103 of the smart phone 101 is used to capture one or more images of an eye 102 of the user 100.

After having captured the image(s), the user's iris is identified in the image(s) and unique features of the iris are extracted from the image and compared to features of an iris image previously captured during enrolment of the user 100. If the iris features of the currently captured image - at least to a sufficiently high degree - correspond to those of the previously enrolled image, there is a match and the user 100 is authenticated. The smart phone 101 is hence unlocked.

It should be noted that this is exemplifying only, and that authentication may be utilized for numerous purposes, such as e.g. unlocking a vehicle to be entered by a user, allowing a user to enter a building, to perform a purchase at a point-of-sale terminal, etc, using appropriately adapted iris recognition systems.

Figure 2 shows a camera image sensor 104 being part of a biometric recognition system 110 according to an embodiment implemented in e.g. the smart phone 101 of Figure 1. The system will be referred to as an iris recognition system but may alternatively be used to recognize face- or periocular features of an individual. The iris recognition system 110 comprises the image sensor 104 and a processing unit 105, such as one or more microprocessors, for controlling the image sensor 104 and for analysing captured images of one or both of the eyes 102 of the user 100. The iris recognition system 110 further comprises a memory 106. The iris recognition system 110 in turn, typically, forms part of the smart phone 100 as exemplified in Figure 1.

The camera 103 will capture an image of the user's eye 102 resulting in a representation of the eye being created by the image sensor 104 in order to have the processing unit 105 determine whether the iris data extracted by the processing unit 105 from image sensor data corresponds to the iris of an authorised user or not by comparing the iris image to one or more authorised previously enrolled iris templates pre-stored in the memory 106.

With reference again to Figure 2, the steps of the method performed by the iris recognition system 110 are in practice performed by the processing unit 105 embodied in the form of one or more microprocessors arranged to execute a computer program 107 downloaded to the storage medium 106 associated with the microprocessor, such as a RAM, a Flash memory or a hard disk drive. Alternatively, the computer program is included in the memory (being for instance a NOR flash) during manufacturing. The processing unit 105 is arranged to cause the iris recognition system 110 to carry out the method according to embodiments when the appropriate computer program 107 comprising computer-executable instructions is downloaded to the storage medium 106 and executed by the processing unit 105. The storage medium 106 may also be a computer program product comprising the computer program 107. Alternatively, the computer program 107 may be transferred to the storage medium 106 by means of a suitable computer program product, such as a Digital Versatile Disc (DVD) or a memory stick. As a further alternative, the computer program 107 may be downloaded to the storage medium 106 over a network. The processing unit 105 may alternatively be embodied in the form of a digital signal processor (DSP), an application specific integrated circuit (ASIC), a field-programmable gate array (FPGA), a complex programmable logic device (CPLD), etc.

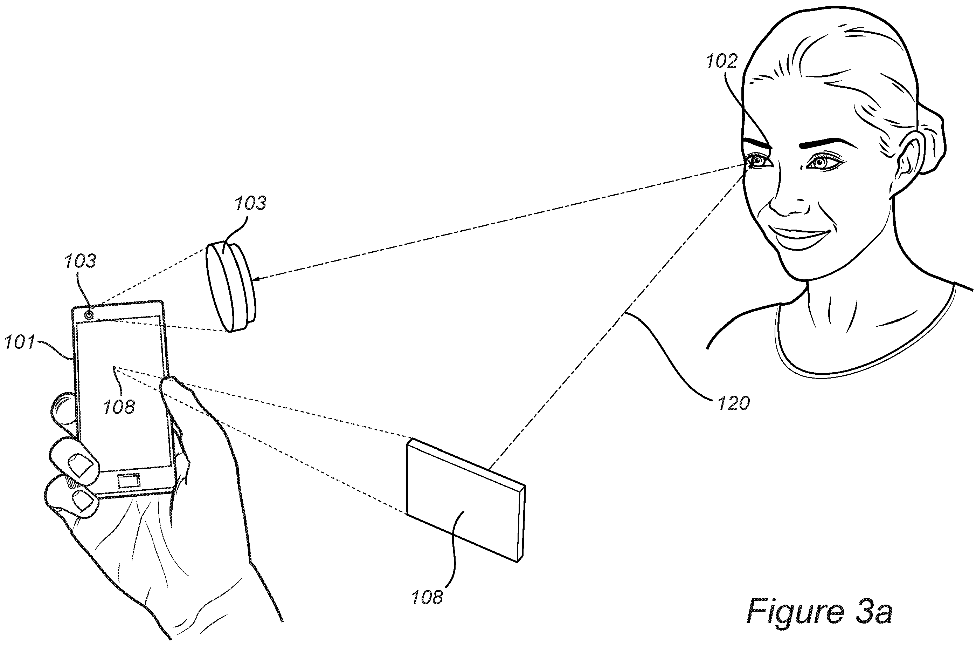

Now, with reference to Figure 3a, in an example it is assumed that unpolarized light 120 is being emitted e.g. by light-emitting elements 108 of a screen of the smart phone 101 or by a camera flash travelling in a path from the smart phone 101 to the eye 102 of the user and back to an image sensor of the camera 103.

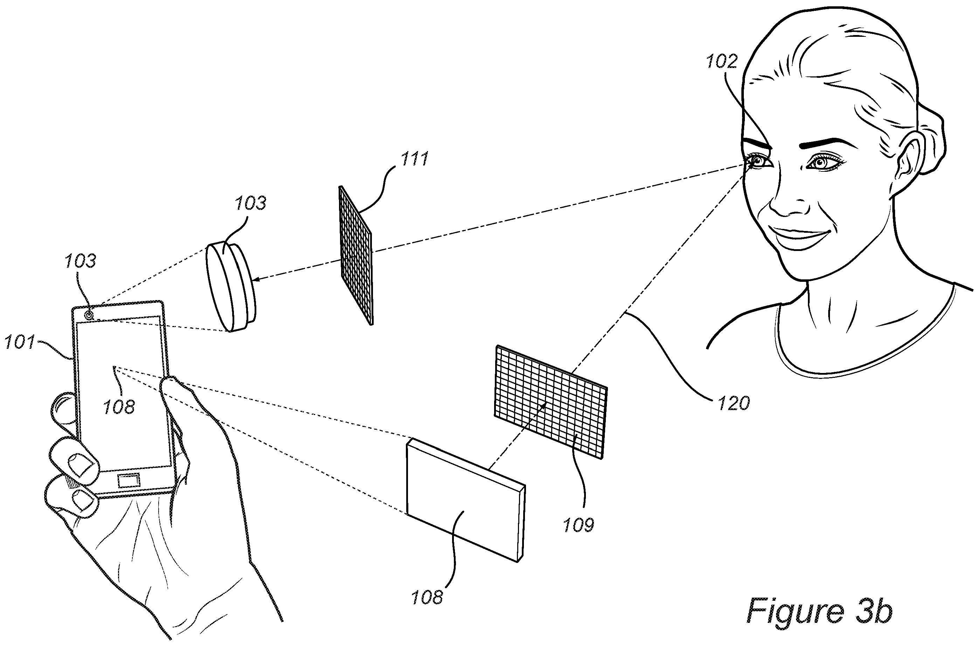

In Figure 3b, it is assumed that the emitted light 120 travelling in a path from the smart phone 101 to the eye 102 of the user and back to the image sensor of the camera 103 is polarized. In this particular example, the polarization of the light 120 is caused by a first polarizing filter 109 arranged at the light-emitting elements 108, for instance being implemented in the form of a polarizing film attached to the screen of the smart phone 101. Further in Figure 3b, a second polarizing filter 111 is arranged at the camera 103, for instance being implemented in the form of a polarizing film attached to a lens of the camera 103.

Thus, the camera 103 must be polarization-sensitive in order to be able to perceive the polarized light 120 being reflected against the eye 102 and impinging on the image sensor of the camera 103.

In practice, the image sensor 104 of Figure 2 may be a polarization image sensor where pixel responses vary according to polarization characteristics of the light impinging on the sensor. In other words, an image sensor which is intrinsically selective to polarization by means of a polarizer (i.e. equivalent to the second filter 111 being arranged inside the camera 103 at the image sensor 104) may advantageously be utilized. However, for illustrative purposes, a separate polarization filter 111 is used, which also may be envisaged in a practical implementation as a less expensive alternative to the polarization image sensor.

Now, a human cornea - i.e. the outer membrane in front of the iris of an eye - exhibits birefringent properties that are apparent in a captured image when the eye is illuminated with polarized light and the image is captured with a polarization-sensitive camera 103.

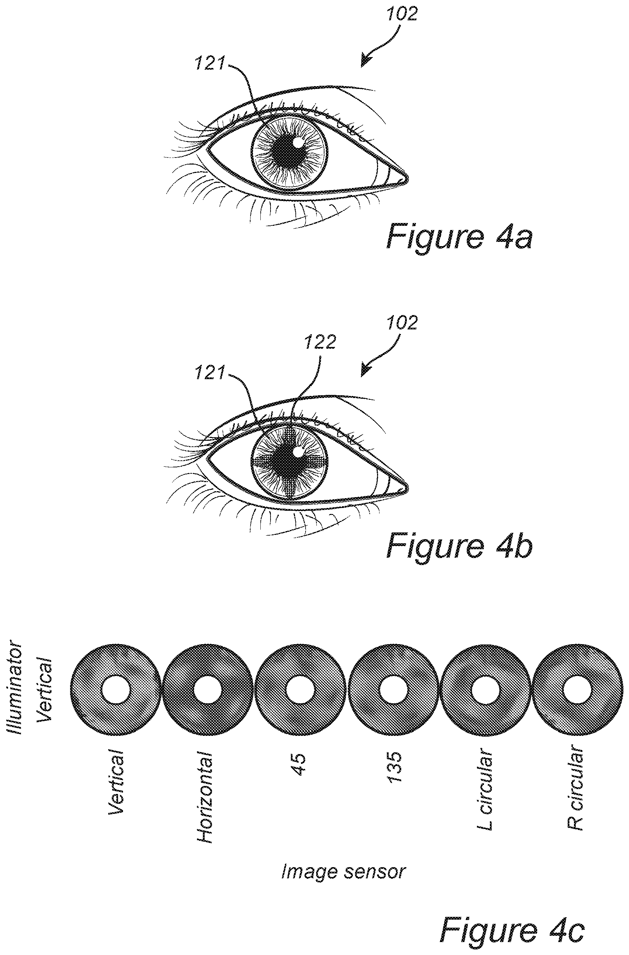

Thus, as shown in Figure 4a corresponding to the scenario of Figure 3a where the eye 102 is subjected to unpolarized light, a "normal" iris 121 will be present in the image captured by the camera 103 whereas in Figure 4b corresponding to the scenario of Figure 3b where the eye 102 is subjected to polarized light, birefringent features 122 of the cornea will be present in the image captured by the polarization-sensitive camera 103 caused by the polarized light impinging on the cornea covering the iris 121. As is understood, should a camera be used which is not polarization-sensitive, the birefringent features will not be present in the captured image, even if the light 120 travelling towards the eye is polarized.

Thus, an image captured by the polarization-sensitive camera 103 while subjecting the iris 121 to polarized light will comprise birefringent cornea features 122 and may thus be utilized for detecting whether the eye 102 is a real, authentic eye or not.

For instance, assuming that an attacker subjects the iris recognition system 110 to a spoof attempt where the attacker presents e.g. a printout of a user's iris. Such a printout will not comprise the birefringent cornea features 122 of the eye 102 of the user, even if it should be noted that iris features of this printout may correspond perfectly to those of the user. Thus, if no birefringent features are detected in the captured image, the system 110 terminates the authentication process since the presented iris is not deemed to originate from a real eye.

Figure 4c illustrates different appearances of birefringent features of the cornea of the user in case of the light emitted by the light-emitting elements 108 is vertically polarized by the first polarizing filter 109 while the light received at the camera 103 is vertically, horizontally, 45°, 135°, left circularly and right circularly polarized, respectively, by the second polarizing filter 111 (or by an intrinsic polarizer in case a polarization image sensor is used). As is understood, the first polarizing filter 109 could also be configured to have any one of a vertically, horizontally, 45°, 135°, left circularly and right circularly polarization, which in this particular example potentially would result in 6 x 6 = 36 different appearances of the birefringent cornea features.

Hence, the appearance of the birefringent cornea features depends on the combination of polarization configuration selected for the first polarizing filter 109 and the second polarizing filter 111. As is understood, one or both of the polarization filters 109, 111 may be configured to be electrically controllable to change polarization. In such a case, the processing unit 105 may control the filters 109, 111 to change polarization configuration as desired.

As mentioned, the system 110 may conclude whether or not birefringent cornea features 122 are present in the captured image and if so determining that the eye is a real eye. However, if the user tilts her head (and thus her eyes), the birefringent cornea features typically become blurred and/or deformed in the captured image due to various polarization properties, making it difficult to determine whether or not the detected blurred/deform birefringent cornea features are correctly rendered in a captured image, or even to detect that the birefringent cornea features are present in a captured image.

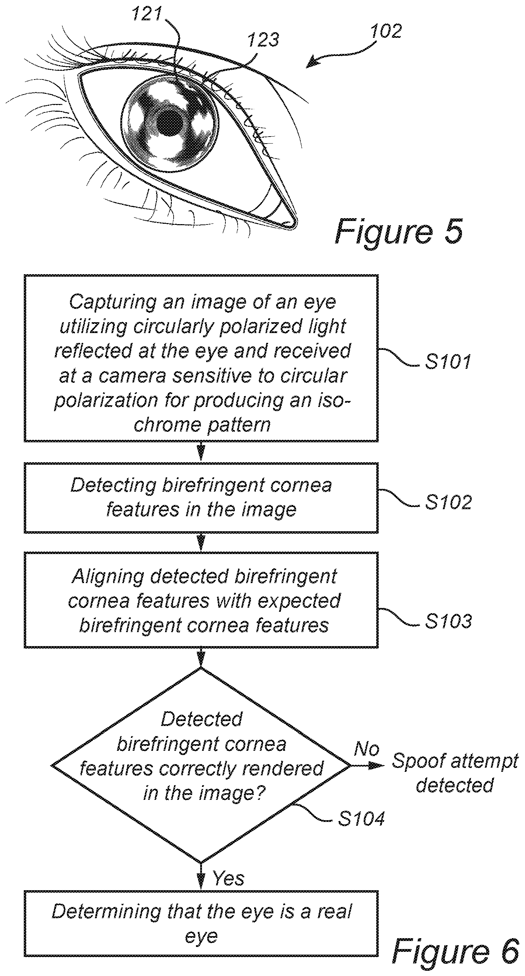

In Figure 5, it is illustrated that if the user 100 tilts her head, the birefringent cornea features become blurred and/or deformed in the captured image due to various polarization properties, making it difficult to determine whether or not the detected blurred/deform birefringent cornea features 123 are correctly rendered or even present in a captured image. As illustrated, birefringent cornea features 123 detected in the eye representation of Figure 5 will not have the appearance that would be expected (taken into account the utilized polarization configuration, cf. Figure 4c).

Typically, with reference to Figure 5, the detected but deformed cornea features 123 caused by the head-tilt would be determined to be incorrectly rendered, and the eye 102 will not be considered a real eye - but likely a spoof - and the authentication process would be terminated.

Figure 6 shows a flowchart of a method of performing real-eye detection resolving this issue, according to an embodiment.

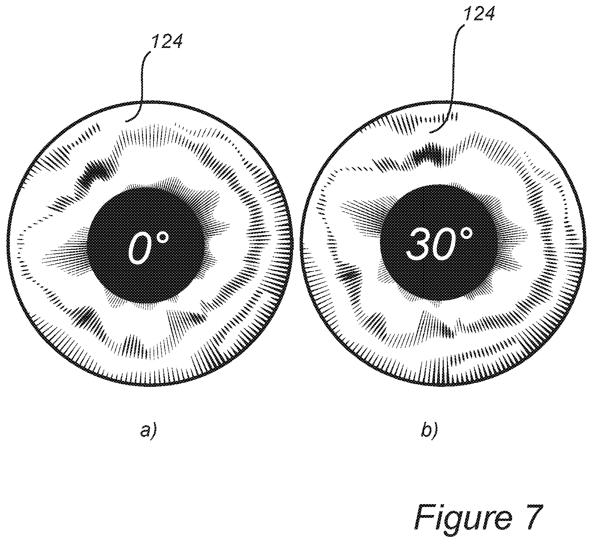

Reference will further be made to Figures 7a and 7b illustrating an image of an eye captured with no head-tilt and an image of the same eye captured with a 30° left-direction head-tilt, respectively, according to the embodiment.

In a first step S101, the polarization-sensitive camera 103 is controlled (typically by the processing unit 105) to capture an image of an iris 121, which image is captured utilizing polarization of light 120 received at the image sensor 104 of the camera 103. As previously discussed, in this example the polarization is caused by the first polarizing filter 109, while the second polarization filter 111 causes the camera 103 to become polarization-sensitive (although a polarization image sensor may be used as previously discussed).

By selecting the first polarizing filter 109 and the second polarization filter 111 to both have a circular polarization configuration, an iso-chrome pattern is produced in the captured image, while an iso-gyre pattern is blocked, or at least suppressed.

Thus, with reference to Figure 7b, the selected circular polarization configuration highlights the iso-chrome pattern of the polarized light 120 while suppressing the iso-gyre pattern of the polarized light 120, and the birefringent cornea features 124 are clearly present and non-deformed in the image even in the case of a 30° head-tilt (in contrast to the cornea features 123 illustrated in Figure 5), which birefringent features 122 are detected by the processing unit 105 in step S102.

Advantageously, this will mitigate or even eliminate the negative effect of the head tilt and ultimately result in an image being free from deformation.

As previously illustrated in Figure 4c, the appearance of the birefringent features 124 depends on the combination of polarization properties selected for the first polarizing filter 109 and the second polarizing filter 111. In this embodiment, both filters are circularly polarized resulting in a particular appearance that may be expected for such polarization configuration.

In step S103 the detected birefringent cornea features 124 are aligned with birefringent cornea features of an expected eye representation.

With reference to Figure 7b, the processing unit 105 may conclude that the current eye orientation pertains to a 30° left-tilt based on the detected birefringent features 124, which will be taken into account when performing the alignment.

In practice, this may be performed by rotating the captured representation of the eye 30° to the right or by rotating a non-tilted, expected eye representation 30° to the left such that the captured eye representation and the expected eye representation have the same orientation (i.e. either zero tilt or a 30° left-tilt), thereby causing the captured eye representation and the expected eye representation to orientationally match.

Alternatively, either the captured eye representation or the expected eye representation is rotated until the detected cornea features match those of the expected eye representation to a sufficient degree, which may be determined by associating the matching with a matching quality metric, and when a set quality threshold is exceed for the matching quality metric, the detected birefringent cornea features are considered to be aligned with the expected birefringent cornea features. Thus, even if the captured eye representation is not perfectly aligned with the expected eye representation, the two eye representations are considered to be sufficiently aligned if the quality threshold is exceeded.

In other words, a best match may be evaluated over multiple rotations of the captured eye representation or the expected eye representation. A number of rotations would then be evaluated until the birefringent cornea features of the two representations align and a match can be found.

Thereafter, in step S104, the processing unit 105 detects - by matching the detected birefringent cornea features 124 with the expected birefringent cornea features - whether the birefringent features 124 are correctly rendered in the captured image, i.e. that the detected birefringent cornea features 124 match the expected appearance of the birefringent cornea features (cf. Figure 4c) when the tilt has been compensated for and the detected birefringent cornea features thus are aligned with the expected birefringent cornea features and hence have the same orientation.

In practice, the detected birefringent cornea features may be matched against birefringent cornea features of a reference image while taking into account the eye orientation and if there is a match, the detected birefringent cornea features are considered correctly rendered.

If there is a match, the processing unit 105 determines in step S105 that the eye in the captured image is a real eye 102. If not, the processing unit 105 may advantageously determine that a spoof attempt has been detected and the authentication process is terminated.

Advantageously, this makes the system invariant to user head-tilts; even if the user would tilt her head, an iso-chrome pattern is highlighted in the captured image, while an iso-gyre pattern is blocked and any blurring/deformation of birefringent cornea features in a captured image is mitigated or even eliminated.

The head tilt is subsequently compensated by performing the alignment upon determining whether or not detected birefringent cornea features match expected birefringent cornea features.

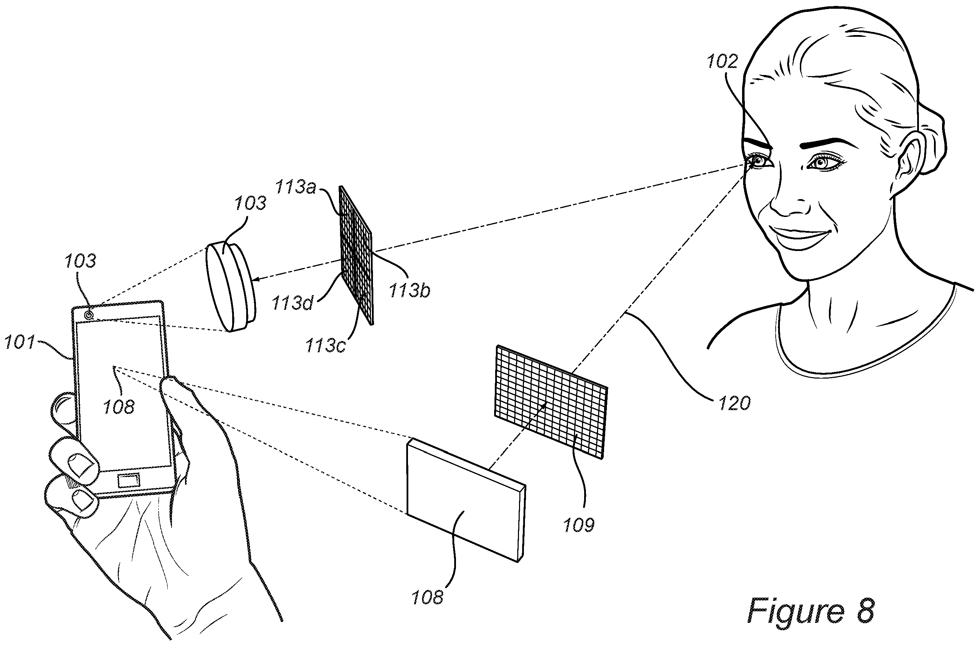

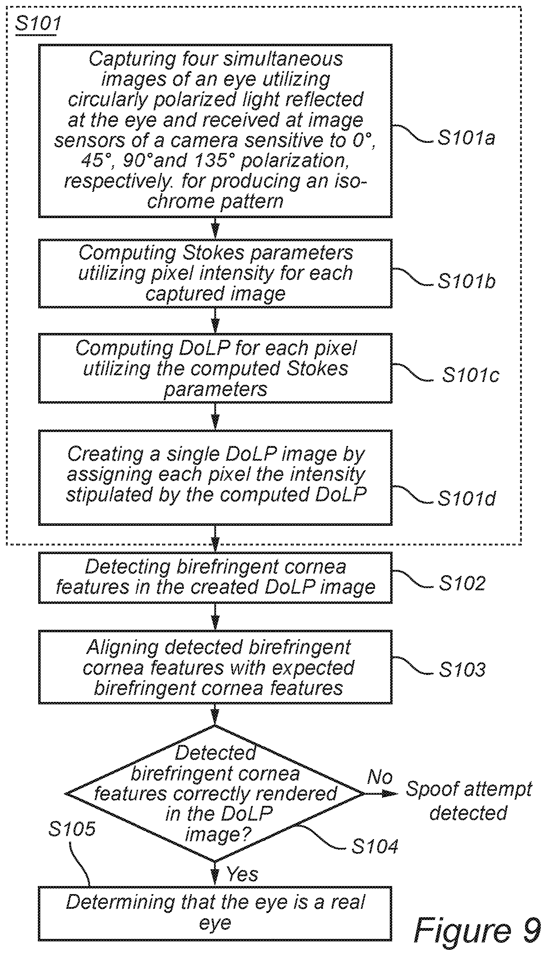

Figure 8 illustrates a further embodiment in which four images are captured simultaneously by the camera 103, each using a different polarization configuration for the second filter 111 as will be discussed in the following. Reference is further made to the flowchart of Figure 9 illustrating this embodiment.

As in the previous embodiment, the first polarization filter 109 is configured to have a circular polarization.

Instead of using the single second filter 111 of the previous embodiment, four different filters are used; third polarization filter 113a, fourth polarization filter 113b, fifth polarization filter 113c and sixth polarization filter 113d being selected to have a polarization configuration of 0°, 45°, 90° and 135°, respectively (the individual configurations are interchangeable among the four filters).

As is understood, different setups may be envisaged in terms of image sensors(s). A single image sensor 104 may be used as described hereinabove to simultaneously capture four images. Alternatively, instead of a single image sensor 104, the camera 103 may comprise four image sensors each being aligned with a respective one of the four polarization filters 113a-d to simultaneously capture four images.

Assuming that the user 100 tilts her head, similar to what is previously described each one of the four images will be deformed (cf. Figure 5) rather than having an expected undeformed appearance as previously discussed with reference to Figure 4c for each filter polarization configuration.

Hence, in this embodiment, the polarization-sensitive camera 103 is controlled (typically by the processing unit 105) in step S101a to capture four simultaneous images of the iris 121, where the first filter 109 is circularly polarized to polarize the light 120 incident on the eye 102 which is reflected against the eye 102 and received at the image sensor 104 of the camera 103 via each of the four polarization filters 113a-d (each of the four filters being aligned with a corresponding section of the image sensor 104 of the camera 103). Thus, in one image-capture instance, four images are captured, each one being subjected to a different polarization configuration and having a size being a fourth of the size of the image captured in the previous embodiments where the single second polarization filter 111 is used at the camera 103.

Thereafter, the four images are processed to create a so-called degree of linear polarization (DoLP) image based on what is commonly referred to in the optical field as Stokes parameters, in which DoLP image the iso-chrome pattern will be highlighted while the iso-gyre pattern is suppressed.

Firstly, the amount (i.e. intensity) of light received at each of the four images sensors - denoted I0, I45, I90 and I135 - is measured at the camera 103, and the Stokes parameters are for each pixel computed in step S101b as: $S 0 = I 0 + I 90 ,$ $S 1 = I 0 - I 90 ,$ and $S 2 = I 45 - I 135 .$

Secondly, the DoLP for each pixel is computed in step S101c utilizing the intensity defined by the computed Stokes parameters: $DoLP = \frac{\sqrt{S {1}^{2} - S {2}^{2}}}{S 0}$

Finally, in step S101d, a single image is created by assigning each pixel of the created image the intensity stipulated by the computed DoLP. The created single image will in the following by referred to as the DoLP image.

The created DoLP image will have the appearance of that illustrated in Figure 7b, where the iso-chrome pattern of the polarized light 120 is highlighted while the iso-gyre pattern of the polarized light 120 is suppressed, and the birefringent cornea features 124 are clearly present and non-deformed in the created DoLP image even in the case of a 30° head-tilt (in contrast to the blurred cornea features 123 illustrated in Figure 5), which birefringent features 124 are detected by the processing unit 105 in step S102.

As already described with reference to previous embodiments, the detected birefringent cornea features 124 are aligned to the expected birefringent cornea features in step S103.

In practice, this may be performed by tilting the representation of the eye of the created DoLP image 30° the right (i.e. to a zero tilt angle) or by tilting the non-tilted expected representation 30° to the left such that the DoLP representation and the expected representation have the same orientation (i.e. either zero tilt or a 30° left-tilt). As previously discussed, this may have to be evaluated by performing multiple rotations until alignment occurs.

Thereafter, in step S104, the processing unit 105 determines - by matching the detected birefringent cornea features 124 with the expected birefringent cornea features - whether the birefringent features 124 detected in the created DoLP image are correctly rendered, i.e. that the detected birefringent cornea features 124 match the expected appearance of the birefringent cornea features (cf. Figure 4c) when the tilt has been compensated for and the two eye representations, i.e. the actual and the expected eye representations are aligned and hence have the same orientation. Thus, the highlighting of the iso-chrome pattern and suppressing of the iso-gyre pattern makes the system invariant to head-tilts, and any head tilt is subsequently taken into account when comparing the cornea features of the actual eye representation with those of the (aligned) expected eye representation.

If so, the processing unit 105 determines in step S105 that the eye indeed is a real eye 102. If not, the processing unit 105 may determine that a spoof attempt advantageously has been detected and the authentication process is terminated.

In a further embodiment, applicable to both the embodiment of Figure 5 and the embodiment of Figure 9, it is envisaged that if after a number of failed detection attempts have been made in step S104, such as two failed attempts, the iris recognition system 110 enters a breach mode, where the user is required to prove knowledge of secret credentials, for instance enter a pin code, before any further attempts can be made.

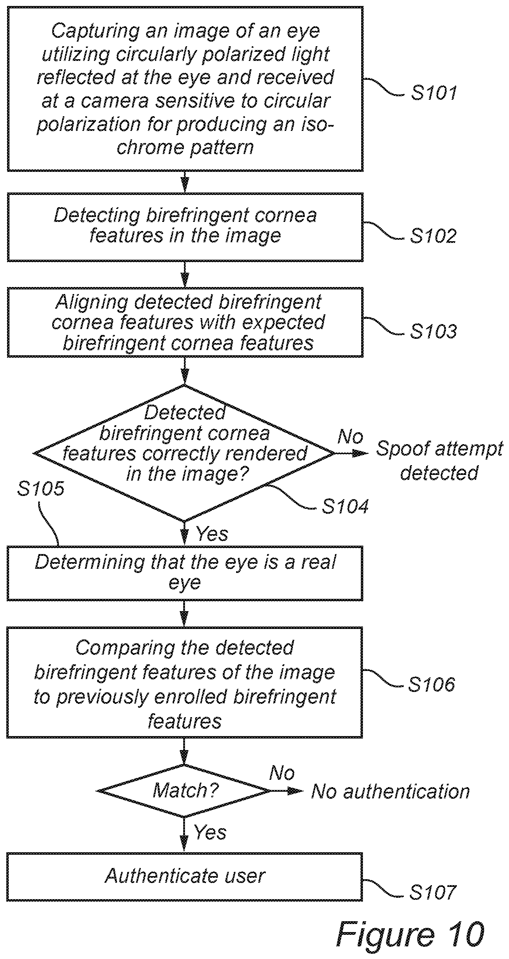

Figure 10 illustrates a further embodiment where the detected birefringent cornea features further are utilized to authenticate a user.

As previously discussed with reference to Figure 4c, the birefringent features 122 will have different appearances depending on the polarization configuration used, as determined by the first and second polarizing filters 109, 111 of Figure 3b or the first polarization filter 109 and the fourth, fifth, sixth and seventh polarization filters 113a-d of Figure 8, and are further distinctive to the user 100.

A user will typically exhibit characteristic birefringent features for each given configuration, from which characteristic birefringent features the user may be recognized, in addition to detecting whether or not the eye is authentic as has been described in the previous embodiments.

In the embodiment of Figure 10, this is exploited to authenticate an individual, for instance with the purpose of e.g. unlocking the smart phone 101 or allow a user to start a car in case the system is implemented in the car.

It should be noted that this embodiment will be based on the embodiment previously described with reference to figure 5, but may as well use the created DoLP image of the embodiment of Figure 9.

Thus, if after the processing unit 105 has determined in step S105 that the eye is a real eye, the birefringent cornea features detected in step S104 to be correctly rendered is compared in step S106 to previously enrolled birefringent cornea features of templates stored in the memory 106 of the iris recognition system 110 and if there is a match between the detected birefringent features and the previously enrolled birefringent features, the user is authenticated in step S107.

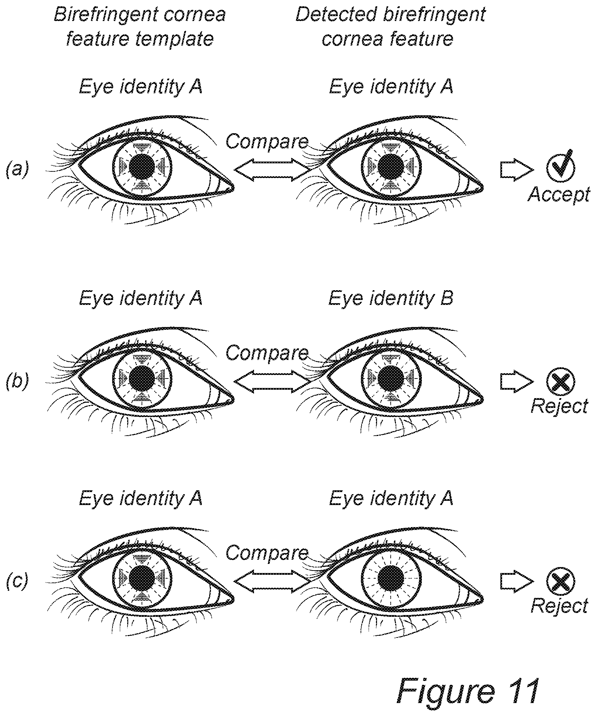

Figure 11 illustrates three different authentication scenarios to which reference will be made.

In first scenario (a), the birefringent cornea features detected in step S104 to be correctly rendered in the captured image (or the DoLP image) are compared in step S106 to the previously enrolled birefringent cornea features of the templates stored in the memory 106 and since in this scenario there is a match between the detected birefringent features and the previously enrolled birefringent features, the user is authenticated in step S107. In other words, the identity of the user 100 associated with the detected birefringent features determined to be correctly rendered in step S104 must indeed correspond to identity A associated with the birefringent feature template pre-stored in the memory 106.

In second scenario (b), the birefringent cornea features detected in step S104 to be correctly rendered are compared in step S106 to the previously enrolled birefringent cornea features of the templates stored in the memory 106. However, since the detected birefringent features do not match the birefringent feature template in step S106, authentication is not successful. Thus, the detected birefringent features determined to be correctly rendered in step S104 cannot correspond to enrolled identity A but rather a different identity, in this example denoted identity B. As a result, the user is rejected.

In third scenario (c), an attempt is made in step S104 to detect birefringent cornea features from the image captured in step S101 but since in this scenario no birefringent features can be detected, the system 110 concludes that a spoof attempt has occurred where an attacker presents e.g. a printout of a user's iris. It should be noted that iris features of this printout nevertheless may correspond perfectly to those of the user. As a result, the authentication process is terminated.

In a further embodiment, in addition to (or alternatively to) performing authentication based on detected birefringent cornea features, further detected biometric features of the captured image(s) may also be considered.

It is noted that birefringent features of the cornea typically are less expressive than face features and even more so when compared to iris features. Thus, in a scenario where high security and reliability is required in the authentication process, the birefringent cornea feature detection described hereinabove is expanded upon such that iris feature detection and/or face feature detection and subsequent iris/face feature authentication further is undertaken.

Further envisaged biometric features to be utilized include those in the so-called periocular region, which is the area around the eye including features like eyelashes, eyebrows, eyelids, eye shape, tear duct, skin texture, etc.

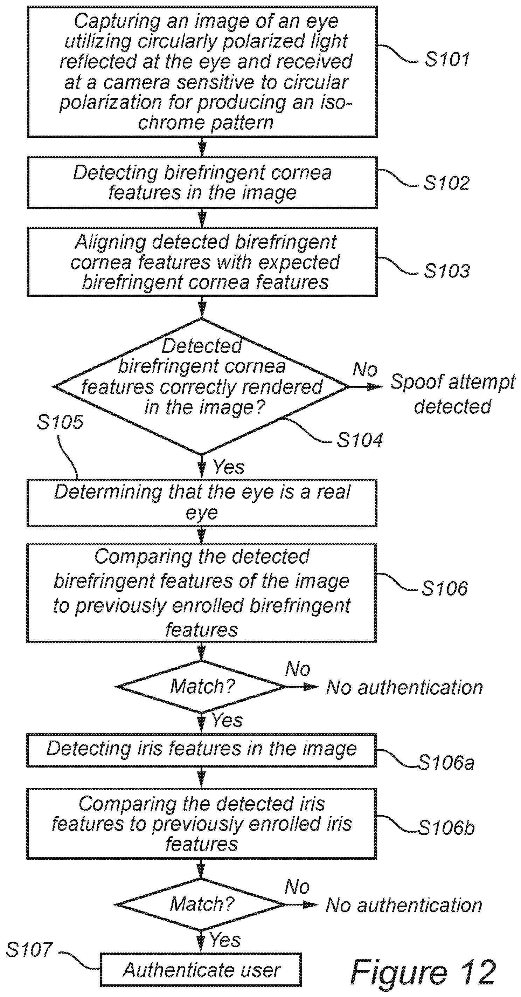

Figure 12 illustrates this embodiment, wherein after it has been determined that the detected birefringent cornea features matches those previously enrolled, iris features are detected in the image in which the birefringent corneal features where considered to be correctly rendered, i.e. the image in which the head-tilt has been compensated for (being the DoLP image in the case of the embodiment of Figure 9), in step S106a. It is noted that the detection of iris features not necessarily is affected by the polarization filters 109, 111. For instance, as illustrated in Figure 4b, features of the iris 121 will be present in a captured image along with birefringent cornea features 122.

Thereafter, the processing unit 105 compares the detected iris features to previously enrolled iris feature template(s) in step S106b.

If there is a match also for the compared iris features, the user 100 is authenticated in step S107. If not, authentication fails.

Advantageously, not only is the level of security and reliability raised in the authentication process, but liveness detection is further provided by means of the birefringent cornea feature detection. In other words, if the presented iris is a spoof (such as a printout of an iris image), no birefringent cornea features will be detected and the authentication will be terminated in the match operation undertaken in step S104.

As is understood, if for some reason the iris features are difficult to detect in in the captured image(s) being subject to polarized light, appropriate image processing may be applied, such as filtering, before the iris detection. As a further alternative, another image not being subjected to polarization is captured from which the iris, face or periocular features are detected.

While Figure 12 illustrates that authentication is based on both detected birefringent cornea features (cf. S106) and detected iris features (cf. S106b), it may be envisaged that step S106 is omitted and that after the processing unit 105 has determined in step S105 that the eye indeed is a real eye, the process proceeds to step S106b for performing the authentication based on iris features only.

The aspects of the present disclosure have mainly been described above with reference to a few embodiments and examples thereof. However, as is readily appreciated by a person skilled in the art, other embodiments than the ones disclosed above are equally possible within the scope of the invention, as defined by the appended patent claims.

Thus, while various aspects and embodiments have been disclosed herein, other aspects and embodiments will be apparent to those skilled in the art. The various aspects and embodiments disclosed herein are for purposes of illustration and are not intended to be limiting, with the scope of the present invention being indicated by the following claims.

## Claims

1. A method of a biometric recognition system (110) of performing real-eye detection for an individual (100), comprising:
capturing (S101) at least one image comprising a representation of an eye (102) of the individual (100), which image is captured utilizing polarized light reflected at the eye (102) and received at a polarization-sensitive camera (103) capturing said image, wherein a polarization configuration is selected which produces an iso-chrome pattern of the representation of the eye (102) in the captured image;
detecting (S102), from the representation, birefringent features (124) of a cornea of the individual (100);
aligning (S103) the detected birefringent cornea features (124) with birefringent cornea features of an expected eye representation;
determining (S104), by matching the aligned detected birefringent cornea features (124) with the expected birefringent cornea features, whether the detected birefringent cornea features (124) are correctly rendered in the captured image; and if so:
determining (S105) that the eye (121) is a real eye (102).

2. The method of claim 1, wherein the polarization of light is caused by:
emitting light through a first polarization filter (109) being circularly polarized; and the polarization sensitivity of the camera (103) being caused by:
receiving the polarized light reflected by the iris (121) at the camera (103) via a second polarization filter (111) being circularly polarized.

3. The method of claim 1, wherein the polarization of light is caused by:
emitting light through a first polarization filter (109) being circularly polarized; and the polarization sensitivity of the camera (103) being caused by:
receiving the polarized light reflected by the eye (102) at the camera (103) via a third polarization filter (113a) having 0° polarization, a fourth polarization filter (113b) having 45° polarization, a fifth polarization filter (113c) having 90° polarization and a sixth polarization filter (113d) having 135° polarization, each filter being aligned with an image sensor of the camera (103) to enable simultaneous capturing of four differently polarized images comprising the representation of the eye (102) of the individual (100), the capturing (S101) of the at least one image comprising a representation of an eye (102) of the individual (100) comprising:
capturing (S101a) four simultaneous images;
computing (S101b) Stokes parameters utilizing pixel intensity for each of the captured images;
computing (S101c) degree of linear polarization for each pixel utilizing the computed Stokes parameters; and
creating (S101d) a single image by assigning each pixel of the created image the intensity stipulated by the computed degree of linear polarization, from which created single image the birefringent cornea features are detected.

4. The method of any one of the preceding claims, the aligning being performed by rotating the captured representation of the eye (102) such that the captured eye representation has a same orientation as a non-tilted expected eye representation or by rotating the non-tilted expected eye representation to have the same eye orientation as the captured eye representation.

5. The method of any one of the preceding claims, wherein if after a set number of failed attempts have been made for determining (S104) that the birefringent features (124) are correctly rendered in the captured image, the individual (100) is required to prove knowledge of secret credentials before further attempts are allowed.

6. The method of any one of the preceding claims, further comprising:
comparing (S106) the detected birefringent cornea features (124) determined to be correctly rendered with previously enrolled birefringent cornea features; and if there is a match:
authenticating (S107) an individual (100) associated with the birefringent cornea features (124) determined to be correctly rendered.

7. The method of any one of the preceding claims, further comprising:
detecting (S106a), from the image in which the birefringent cornea features are determined to be correctly rendered or from another captured image, iris, face or periocular features; and
comparing (S105b) the detected iris, face or periocular features with previously enrolled iris, face or periocular features; and if there is a match an individual (100) associated with the detected iris, face or periocular features is authenticated (S106).

8. A computer program (107) comprising computer-executable instructions for causing a biometric recognition system (110) to perform steps recited in any one of claims 1-7 when the computer-executable instructions are executed on a processing unit (105) included in the iris recognition system (110).

9. A computer readable medium (106), the computer readable medium having the computer program (107) according to claim 8 embodied thereon.

10. A biometric recognition system (110) configured to perform real-eye detection, the system (110) comprising a polarization-sensitive camera (103) configured to:
capture at least one image comprising a representation of an eye (102) of the individual (100), which image is captured utilizing polarized light reflected at the eye (102) and received at a polarization-sensitive camera (103) capturing said image, wherein a polarization configuration is selected which produces an iso-chrome pattern of the representation of the eye (102) in the captured image; the system (110) further comprising a processing unit (105) configured to:
detect, from the representation, birefringent features (124) of a cornea of the individual (100);
align the detected birefringent features (124) with birefringent cornea features of an expected eye representation;
determine, by matching the aligned detected birefringent cornea features (124) with the expected birefringent cornea features, whether the birefringent features (124) are correctly rendered in the captured image; and if so to:
determine that the eye (102) is a real eye (102).

11. The biometric recognition system (110) of claim 10, wherein the polarization of light is caused by the system (110) being configured to:
emit light through a first polarization filter (109) being circularly polarized; and the polarization sensitivity of the camera (103) being caused by the system (110) being configured to:
receive the polarized light reflected by the eye (102) at the camera (103) via a second polarization filter (111) being circularly polarized.

12. The biometric recognition system (110) of claim 11, wherein the polarization of light is caused by the system (110) being configured to:
emit light through a first polarization filter (109) being circularly polarized; and the polarization sensitivity of the camera (103) being caused by the system (110) being configured to:
receive the polarized light reflected by the eye (102) at the camera (103) via a third polarization filter (113a) having 0° polarization, a fourth polarization filter (113b) having 45° polarization, a fifth polarization filter (113c) having 90° polarization and a sixth polarization filter (113d) having 135° polarization, each filter being aligned with an image sensor of the camera (103) to enable simultaneous capturing of four differently polarized images comprising the representation of the eye (102) of the individual (100), the camera (103) being configured to, when capturing the at least one image comprising a representation of an eye (102) of the individual (100):
capture four simultaneous images; the processing unit (105) being configured to:
compute Stokes parameters utilizing pixel intensity for each of the captured images;
compute degree of linear polarization for each pixel utilizing the computed Stokes parameters; and to
create a single image by assigning each pixel of the created image the intensity stipulated by the computed degree of linear polarization, from which created single image the birefringent cornea features are detected.

13. The biometric recognition system (110) of any one of claims 10-12, the processing unit (105) being configured to perform the aligning by rotating the captured representation of the eye (1021) such that the captured eye representation has a same orientation as a non-tilted expected eye representation or by rotating the non-tilted expected eye representation to have the same eye orientation as the captured eye representation.

14. The biometric recognition system (110) of any one of claims 10-13, the processing unit (105) further being configured to, if after a set number of failed attempts have been made for determining that the detected birefringent cornea features (124) are correctly rendered in the captured image, the individual (100) is required to prove knowledge of secret credentials before further attempts are allowed.

15. The biometric recognition system (110) of any one of claims 10-14, the processing unit (105) further being configured to:
compare the detected birefringent cornea features (124) determined to be correctly rendered with previously enrolled birefringent cornea features; and if there is a match to:
authenticate an individual (100) associated with the birefringent cornea features (124) determined to be correctly rendered.

## Patentansprüche

1. Verfahren eines biometrischen Erkennungssystems (110) zum Durchführen einer Detektion eines echten Auges für eine Person (100), umfassend:
Aufnehmen (S101) mindestens eines Bildes, das eine Darstellung eines Auges (102) der Person (100) umfasst, wobei das Bild unter Verwendung von polarisiertem Licht aufgenommen wird, das an dem Auge (102) reflektiert wird und in einer polarisationsempfindlichen Kamera (103) empfangen wird, die das Bild aufnimmt, wobei eine Polarisationskonfiguration gewählt wird, die ein isochromes Muster der Darstellung des Auges (102) in dem aufgenommenen Bild erzeugt;
Detektieren (S102), aus der Darstellung, doppelbrechender Merkmale (124) einer Hornhaut der Person (100);
Ausrichten (S103) der detektierten doppelbrechenden Hornhautmerkmale (124) auf doppelbrechende Hornhautmerkmale einer erwarteten Augendarstellung;
Bestimmen (S104), durch Abgleichen der ausgerichteten detektierten doppelbrechenden Hornhautmerkmale (124) mit den erwarteten doppelbrechenden Hornhautmerkmalen, ob die detektierten doppelbrechenden Hornhautmerkmale (124) in dem aufgenommenen Bild korrekt wiedergegeben sind; und falls ja:
Bestimmen (S105), dass das Auge (121) ein echtes Auge (102) ist.

2. Verfahren nach Anspruch 1, wobei die Polarisation von Licht bewirkt wird durch:
Aussenden von Licht durch ein erstes Polarisationsfilter (109) hindurch, das zirkular polarisiert ist; und die Polarisationsempfindlichkeit der Kamera (103) bewirkt wird durch:
Empfangen des durch die Iris (121) reflektierten polarisierten Lichts in der Kamera (103) über ein zweites Polarisationsfilter (111), das zirkular polarisiert ist.

3. Verfahren nach Anspruch 1, wobei die Polarisation von Licht bewirkt wird durch:
Aussenden von Licht durch ein erstes Polarisationsfilter (109) hindurch, das zirkular polarisiert ist; und die Polarisationsempfindlichkeit der Kamera (103) bewirkt wird durch:
Empfangen des durch das Auge (102) reflektierten polarisierten Lichts in der Kamera (103) über ein drittes Polarisationsfilter (113a), das eine Polarisation von 0° aufweist, ein viertes Polarisationsfilter (113b), das eine Polarisation von 45° aufweist, ein fünftes Polarisationsfilter (113c), das eine Polarisation von 90° aufweist, und ein sechstes Polarisationsfilter (113d), das eine Polarisation von 135° aufweist, wobei jedes Filter auf einen Bildsensor der Kamera (103) ausgerichtet ist, um das gleichzeitige Aufnehmen von vier unterschiedlich polarisierten Bildern zu ermöglichen, die die Darstellung des Auges (102) der Person (100) umfassen, wobei das Aufnehmen (S101) des mindestens einen Bildes, das eine Darstellung eines Auges (102) der Person (100) umfasst, umfasst:
Aufnehmen (S101a) von vier gleichzeitigen Bildern;
Berechnen (S101b) von Stokes-Parametern unter Verwendung einer Pixelintensität für jedes der aufgenommenen Bilder;
Berechnen (S101c) eines Grades der linearen Polarisation für jedes Pixel unter Verwendung der berechneten Stokes-Parameter; und
Erzeugen (S101d) eines einzelnen Bildes, indem jedem Pixel des erzeugten Bildes die durch den berechneten Grad der linearen Polarisation vorgegebene Intensität zugewiesen wird, wobei aus diesem erzeugten einzelnen Bild die doppelbrechenden Hornhautmerkmale detektiert werden.

4. Verfahren nach einem der vorangehenden Ansprüche, wobei das Ausrichten durchgeführt wird durch Drehen der aufgenommenen Darstellung des Auges (102) so, dass die aufgenommene Augendarstellung eine selbe Ausrichtung hat wie eine nicht-geneigte erwartete Augendarstellung, oder durch Drehen der nicht-geneigten erwarteten Augendarstellung so, dass sie dieselbe Augenausrichtung hat wie die aufgenommene Augendarstellung.

5. Verfahren nach einem der vorangehenden Ansprüche, wobei, nachdem eine festgelegte Anzahl fehlgeschlagener Versuche unternommen wurde, um zu bestimmen (S104), dass die doppelbrechenden Merkmale (124) in dem aufgenommenen Bild korrekt wiedergegeben sind, die Person (100) aufgefordert wird, die Kenntnis geheimer Berechtigungen nachzuweisen, bevor weitere Versuche gestattet werden.

6. Verfahren nach einem der vorangehenden Ansprüche, des Weiteren umfassend:
Vergleichen (S106) der detektierten doppelbrechenden Hornhautmerkmale (124), von denen bestimmt wurde, dass sie korrekt wiedergegeben wurden, mit zuvor registrierten doppelbrechenden Hornhautmerkmalen; und falls eine Übereinstimmung vorliegt:
Authentifizieren (S107) einer Person (100), die mit den doppelbrechenden Hornhautmerkmalen (124) verknüpft ist, von denen bestimmt wurde, dass sie korrekt wiedergegeben wurden.

7. Verfahren nach einem der vorangehenden Ansprüche, des Weiteren umfassend:
Detektieren (S106a) von Iris-, Gesichts- oder periokulären Merkmalen aus dem Bild, in dem die doppelbrechenden Hornhautmerkmale als korrekt wiedergegeben bestimmt wurden, oder aus einem anderen aufgenommenen Bild; und
Vergleichen (S105b) der detektierten Iris-, Gesichts- oder periokulären Merkmale mit zuvor registrierten Iris-, Gesichts- oder periokulären Merkmalen; und falls eine Übereinstimmung vorliegt, so wird eine Person (100), die mit den detektierten Iris-, Gesichts- oder periokulären Merkmalen verknüpft ist, authentifiziert (S106).

8. Computerprogramm (107), das computerausführbare Instruktionen umfasst, um ein biometrisches Erkennungssystem (110) zu veranlassen, die in einem der Ansprüche 1-7 genannten Schritte durchzuführen, wenn die computerausführbaren Instruktionen in einer in dem Iriserkennungssystem (110) enthaltenen Verarbeitungseinheit (105) ausgeführt werden.

9. Computerlesbares Medium (106), wobei auf dem computerlesbaren Medium das Computerprogramm (107) nach Anspruch 8 verkörpert ist.

10. Biometrisches Erkennungssystem (110), das dazu eingerichtet ist, eine Detektion eines echten Auges durchzuführen, wobei das System (110) eine polarisationsempfindliche Kamera (103) umfasst, die eingerichtet ist zum:
Aufnehmen mindestens eines Bildes, das eine Darstellung eines Auges (102) der Person (100) umfasst, wobei das Bild unter Verwendung von polarisiertem Licht aufgenommen wird, das an dem Auge (102) reflektiert wird und in einer polarisationsempfindlichen Kamera (103) empfangen wird, die das Bild aufnimmt, wobei eine Polarisationskonfiguration gewählt wird, die ein isochromes Muster der Darstellung des Auges (102) in dem aufgenommenen Bild erzeugt; wobei das System (110) des Weiteren eine Verarbeitungseinheit (105) umfasst, die eingerichtet ist zum:
Detektieren, aus der Darstellung, doppelbrechender Merkmale (124) einer Hornhaut der Person (100);
Ausrichten der detektierten doppelbrechenden Merkmale (124) auf doppelbrechende Hornhautmerkmale einer erwarteten Augendarstellung;
Bestimmen, durch Abgleichen der ausgerichteten detektierten doppelbrechenden Hornhautmerkmale (124) mit den erwarteten doppelbrechenden Hornhautmerkmalen, ob die doppelbrechenden Merkmale (124) in dem aufgenommenen Bild korrekt wiedergegeben sind; und falls ja:
Bestimmen, dass das Auge (102) ein echtes Auge (102) ist.

11. Biometrisches Erkennungssystem (110) nach Anspruch 10, wobei die Polarisation von Licht dadurch bewirkt wird, dass das System (110) eingerichtet ist zum:
Aussenden von Licht durch ein erstes Polarisationsfilter (109) hindurch, das zirkular polarisiert ist; und die Polarisationsempfindlichkeit der Kamera (103) dadurch bewirkt wird, dass das System (110) eingerichtet ist zum:
Empfangen des durch das Auge (102) reflektierten polarisierten Lichts in der Kamera (103) über ein zweites Polarisationsfilter (111), das zirkular polarisiert ist.

12. Biometrisches Erkennungssystem (110) nach Anspruch 11, wobei die Polarisation von Licht dadurch bewirkt wird, dass das System (110) eingerichtet ist zum:
Aussenden von Licht durch ein erstes Polarisationsfilter (109) hindurch, das zirkular polarisiert ist; und die Polarisationsempfindlichkeit der Kamera (103) dadurch bewirkt wird, dass das System (110) eingerichtet ist zum:
Empfangen des durch das Auge (102) reflektierten polarisierten Lichts in der Kamera (103) über ein drittes Polarisationsfilter (113a), das eine Polarisation von 0° aufweist, ein viertes Polarisationsfilter (113b), das eine Polarisation von 45° aufweist, ein fünftes Polarisationsfilter (113c), das eine Polarisation von 90° aufweist, und ein sechstes Polarisationsfilter (113d), das eine Polarisation von 135° aufweist, wobei jedes Filter auf einen Bildsensor der Kamera (103) ausgerichtet ist, um das gleichzeitige Aufnehmen von vier unterschiedlich polarisierten Bildern zu ermöglichen, die die Darstellung des Auges (102) der Person (100) umfassen, wobei die Kamera (103) beim Aufnehmen des mindestens einen Bildes, das eine Darstellung eines Auges (102) der Person (100) umfasst, eingerichtet ist zum:
Aufnehmen von vier gleichzeitigen Bildern; wobei die Verarbeitungseinheit (105) eingerichtet ist zum:
Berechnen von Stokes-Parametern unter Verwendung einer Pixelintensität für jedes der aufgenommenen Bilder;
Berechnen eines Grades der linearen Polarisation für jedes Pixel unter Verwendung der berechneten Stokes-Parameter; und zum
Erzeugen eines einzelnen Bildes, indem jedem Pixel des erzeugten Bildes die durch den berechneten Grad der linearen Polarisation vorgegebene Intensität zugewiesen wird, wobei aus diesem erzeugten einzelnen Bild die doppelbrechenden Hornhautmerkmale detektiert werden.

13. Biometrisches Erkennungssystem (110) nach einem der Ansprüche 10-12, wobei die Verarbeitungseinheit (105) eingerichtet ist zum Durchführen des Ausrichtens durch Drehen der aufgenommenen Darstellung des Auges (1021) so, dass die aufgenommene Augendarstellung eine selbe Ausrichtung hat wie eine nicht-geneigte erwartete Augendarstellung, oder durch Drehen der nicht-geneigten erwarteten Augendarstellung so, dass sie dieselbe Augenausrichtung hat wie die aufgenommene Augendarstellung.

14. Biometrisches Erkennungssystem (110) nach einem der Ansprüche 10-13, wobei die Verarbeitungseinheit (105) des Weiteren dazu eingerichtet ist, nachdem eine festgelegte Anzahl fehlgeschlagener Versuche unternommen wurde, um zu bestimmen, dass die detektierten doppelbrechenden Hornhautmerkmale (124) in dem aufgenommenen Bild korrekt wiedergegeben sind, die Person (100) aufgefordert wird, die Kenntnis geheimer Berechtigungen nachzuweisen, bevor weitere Versuche gestattet werden.

15. Biometrisches Erkennungssystem (110) nach einem der Ansprüche 10-14, wobei die Verarbeitungseinheit (105) des Weiteren eingerichtet ist zum:
Vergleichen der detektierten doppelbrechenden Hornhautmerkmale (124), von denen bestimmt wurde, dass sie korrekt wiedergegeben wurden, mit zuvor registrierten doppelbrechenden Hornhautmerkmalen; und falls eine Übereinstimmung vorliegt, zum:
Authentifizieren einer Person (100), die mit den doppelbrechenden Hornhautmerkmalen (124) verknüpft ist, von denen bestimmt wurde, dass sie korrekt wiedergegeben wurden.

## Revendications

1. Procédé d'un système de reconnaissance biométrique (110) de réalisation d'une détection d'œil réel pour un individu (100), comprenant :
la capture (S101) d'au moins une image comprenant une représentation d'un œil (102) de l'individu (100), l'image étant capturée en utilisant une lumière polarisée réfléchie au niveau de l'œil (102) et reçue au niveau d'une caméra sensible à la polarisation (103) capturant ladite image, dans lequel une configuration de polarisation est sélectionnée pour produire un motif isochrome de la représentation de l'œil (102) dans l'image capturée ;
la détection (S102), à partir de la représentation, de caractéristiques biréfringentes (124) d'une cornée de l'individu (100) ;
l'alignement (S103) des caractéristiques biréfringentes de cornée (124) détectées avec des caractéristiques biréfringentes de cornée d'une représentation d'œil attendue ;
la détermination (S104), par appariement des caractéristiques biréfringentes de cornée (124) détectées alignées avec les caractéristiques biréfringentes de cornée attendues, si les caractéristiques biréfringentes de cornée (124) détectées sont correctement rendues dans l'image capturée ; et si tel est le cas :
la détermination (S105) que l'œil (121) est un œil réel (102).

2. Procédé selon la revendication 1, dans lequel la polarisation de lumière est provoquée par :
l'émission de lumière à travers un premier filtre de polarisation (109) qui est polarisé circulairement ; et la sensibilité de polarisation de la caméra (103) étant provoquée par :
la réception de la lumière polarisée réfléchie par l'iris (121) au niveau de la caméra (103) via un deuxième filtre de polarisation (111) qui est polarisé circulairement.

3. Procédé selon la revendication 1, dans lequel la polarisation de lumière est provoquée par :
l'émission de lumière à travers un premier filtre de polarisation (109) qui est polarisé circulairement ; et la sensibilité de polarisation de la caméra (103) étant provoquée par :
la réception de la lumière polarisée réfléchie par l'œil (102) au niveau de la caméra (103) via un troisième filtre de polarisation (113a) présentant une polarisation de 0°, un quatrième filtre de polarisation (113b) présentant une polarisation de 45°, un cinquième filtre de polarisation (113c) présentant une polarisation de 90° et un sixième filtre de polarisation (113d) présentant une polarisation de 135°, chaque filtre étant aligné avec un capteur d'image de la caméra (103) pour permettre la capture simultanée de quatre images polarisées différemment comprenant la représentation de l'œil (102) de l'individu (100), la capture (S101) de l'au moins une image comprenant une représentation d'un œil (102) de l'individu (100) comprenant :
la capture (S101a) de quatre images simultanées ;
le calcul (S101b) de paramètres de Stokes en utilisant une intensité de pixel pour chacune des images capturées ;
le calcul (S101c) d'un degré de polarisation linéaire pour chaque pixel en utilisant les paramètres de Stokes calculés ; et
la création (S101d) d'une image unique par l'attribution, à chaque pixel de l'image créée, de l'intensité stipulée par le degré calculé de polarisation linéaire, les caractéristiques biréfringentes de cornée étant détectées à partir de l'image unique créée.

4. Procédé selon l'une quelconque des revendications précédentes, l'alignement étant réalisé par la rotation de la représentation capturée de l'œil (102) de sorte que la représentation capturée de l'œil présente une même orientation qu'une représentation d'œil attendue non inclinée ou par la rotation de la représentation d'œil attendue non inclinée pour qu'elle présente la même orientation d'œil que la représentation d'œil capturée.

5. Procédé selon l'une quelconque des revendications précédentes, dans lequel, après un nombre défini d'échecs de tentatives de détermination (S104) que les caractéristiques biréfringentes (124) sont correctement rendues dans l'image capturée, l'individu (100) est tenu de prouver sa connaissance d'accréditations secrètes avant que d'autres tentatives ne soient autorisées.

6. Procédé selon l'une quelconque des revendications précédentes, comprenant en outre :
la comparaison (S106) des caractéristiques biréfringentes de cornée (124) détectées déterminées comme étant correctement rendues à des caractéristiques biréfringentes de cornée précédemment enregistrées ; et en cas de correspondance :
l'authentification (S107) d'un individu (100) associé aux caractéristiques biréfringentes de cornée (124) déterminées comme étant correctement rendues.

7. Procédé selon l'une quelconque des revendications précédentes, comprenant en outre :
la détection (S106a), à partir de l'image dans laquelle les caractéristiques biréfringentes de cornée sont déterminées comme étant correctement rendues ou à partir d'une autre image capturée, d'un iris, d'un visage ou de caractéristiques périoculaires ; et
la comparaison (S105b) de l'iris, du visage ou des caractéristiques périoculaires détectés à un iris, un visage ou des caractéristiques périoculaires précédemment enregistrés ; et, en cas de correspondance, un individu (100) associé à l'iris, au visage ou aux caractéristiques périoculaires détectés est authentifié (S106).

8. Programme informatique (107) comprenant des instructions exécutables par ordinateur pour amener un système de reconnaissance biométrique (110) à réaliser des étapes selon l'une quelconque des revendications 1 à 7 lorsque les instructions exécutables par ordinateur sont exécutées sur une unité de traitement (105) incluse dans le système de reconnaissance d'iris (110).

9. Support lisible par ordinateur (106), le support lisible par ordinateur ayant le programme informatique (107) selon la revendication 8 incorporé à celui-ci.

10. Système de reconnaissance biométrique (110) configuré pour réaliser une détection d'œil réel, le système (110) comprenant une caméra sensible à la polarisation (103) configurée pour :
capturer au moins une image comprenant une représentation d'un œil (102) de l'individu (100), l'image étant capturée en utilisant une lumière polarisée réfléchie au niveau de l'œil (102) et reçue au niveau d'une caméra sensible à la polarisation (103) capturant ladite image, dans lequel une configuration de polarisation est sélectionnée pour produire un motif isochrome de la représentation de l'œil (102) dans l'image capturée ; le système (110) comprenant en outre une unité de traitement (105) configurée pour :
détecter, à partir de la représentation, des caractéristiques biréfringentes (124) d'une cornée de l'individu (100) ;
aligner les caractéristiques biréfringentes (124) détectées avec des caractéristiques biréfringentes de cornée d'une représentation d'œil attendue ;
déterminer, par appariement des caractéristiques biréfringentes de cornée (124) détectées alignées avec les caractéristiques biréfringentes de cornée attendues, si les caractéristiques biréfringentes (124) détectées sont correctement rendues dans l'image capturée ; et si tel est le cas :
déterminer que l'œil (102) est un œil réel (102).

11. Système de reconnaissance biométrique (110) selon la revendication 10, dans lequel la polarisation de lumière est provoquée par le fait que le système (110) est configuré pour :
émettre de la lumière à travers un premier filtre de polarisation (109) qui est polarisé circulairement ; et la sensibilité de polarisation de la caméra (103) étant provoquée par le fait que le système (110) est configuré pour :
recevoir la lumière polarisée réfléchie par l'œil (102) au niveau de la caméra (103) via un deuxième filtre de polarisation (111) qui est polarisé circulairement.

12. Système de reconnaissance biométrique (110) selon la revendication 11, dans lequel la polarisation de lumière est provoquée par le fait que le système (110) est configuré pour :
émettre de la lumière à travers un premier filtre de polarisation (109) qui est polarisé circulairement ; et la sensibilité de polarisation de la caméra (103) étant provoquée par le fait que le système (110) est configuré pour :
recevoir la lumière polarisée réfléchie par l'œil (102) au niveau de la caméra (103) via un troisième filtre de polarisation (113a) présentant une polarisation de 0°, un quatrième filtre de polarisation (113b) présentant une polarisation de 45°, un cinquième filtre de polarisation (113c) présentant une polarisation de 90° et un sixième filtre de polarisation (113d) présentant une polarisation de 135°, chaque filtre étant aligné avec un capteur d'image de la caméra (103) pour permettre la capture simultanée de quatre images polarisées différemment comprenant la représentation de l'œil (102) de l'individu (100), la caméra (103) étant configurée pour, lors de la capture de l'au moins une image comprenant une représentation d'un œil (102) de l'individu (100) :
capturer quatre images simultanées ; l'unité de traitement (105) étant configurée pour :
calculer des paramètres de Stokes en utilisant une intensité de pixel pour chacune des images capturées ;
calculer un degré de polarisation linéaire pour chaque pixel en utilisant les paramètres de Stokes calculés ; et pour
créer une image unique par l'attribution, à chaque pixel de l'image créée, de l'intensité stipulée par le degré calculé de polarisation linéaire, les caractéristiques biréfringentes de cornée étant détectées à partir de l'image unique créée.

13. Système de reconnaissance biométrique (110) selon l'une quelconque des revendications 10 à 12, l'unité de traitement (105) étant configurée pour réaliser l'alignement par la rotation de la représentation capturée de l'œil (1021) de sorte que la représentation capturée de l'œil présente une même orientation qu'une représentation d'œil attendue non inclinée ou par la rotation de la représentation d'œil attendue non inclinée pour qu'elle présente la même orientation d'œil que la représentation d'œil capturée.

14. Système de reconnaissance biométrique (110) selon l'une quelconque des revendications 10 à 13, l'unité de traitement (105) étant en outre configurée pour, après un nombre défini d'échecs de tentatives de détermination que les caractéristiques biréfringentes de cornée (124) détectées sont correctement rendues dans l'image capturée, l'individu (100) est tenu de prouver sa connaissance d'accréditations secrètes avant que d'autres tentatives ne soient autorisées.

15. Système de reconnaissance biométrique (110) selon l'une quelconque des revendications 10 à 14, l'unité de traitement (105) étant en outre configurée pour :
comparer les caractéristiques biréfringentes de cornée (124) détectées déterminées comme étant correctement rendues à des caractéristiques biréfringentes de cornée précédemment enregistrées ; et en cas de correspondance :
authentifier un individu (100) associé aux caractéristiques biréfringentes de cornée (124) déterminées comme étant correctement rendues.
